# FASCICULE DE BREVET EUROPEEN

(11) **EP 2 717 987 B1**
(45) Date de publication et mention de la délivrance du brevet: **25.03.2015**
(21) Numéro de dépôt: 12731110.8
(22) Date de dépôt: 05.06.2012
(51) Int. Cl.: B01D 27/10, B01D 35/00, B01D 35/30

(54) **FILTRE À LIQUIDE ET SOUS-ENSEMBLE DE MOTEUR FORMANT SUPPORT DE MONTAGE POUR UNE CARTOUCHE FILTRANTE**
FLÜSSIGKEITSFILTER UND MASCHINENBAUGRUPPE ALS TRÄGER ZUR BEFESTIGUNG EINES FILTERGEHÄUSES
LIQUID FILTER AND ENGINE SUBASSEMBLY ACTING AS A SUPPORT ON WHICH TO MOUNT A FILTER CANISTER

(30) Priorité: 09.06.2011 FR 1155031
(43) Date de publication de la demande: 16.04.2014
(73) Titulaire: Filtrauto, 78280 Guyancourt (FR)
(72) Inventeur: BERTIN, Raphaël, F-78340 Les Clayes sous Bois (FR); ALNOT, Thierry, F-78180 Montigny le Bretonneux (FR)
(74) Mandataire: Cabinet Plasseraud
(86) Numéro de dépôt international: PCT/FR2012/051246
(87) Numéro de publication internationale: WO 2012/168639

(56) Documents cités:
- EP-A2- 0 657 201
- US-A- 3 184 062
- US-A- 3 300 049
- US-A- 6 073 937
- US-A1- 2005 178 717

## Description

La présente invention est relative aux filtres à liquide et aux sous-ensembles de moteur formant support de montage pour une cartouche filtrante.

Plus particulièrement, l'invention concerne un support de montage pour une cartouche filtrante pour liquide (par exemple de l'huile de lubrification moteur) du type comprenant un boîtier délimitant un volume intérieur dans lequel est placé un élément filtrant, le support de montage comprenant :
- une base destinée à être raccordée à un circuit de lubrification pour un moteur à combustion interne, la base présentant une entrée pour liquide de lubrification brut, une sortie pour liquide de lubrification purifié et un conduit communiquant avec l'une parmi ladite entrée et ladite sortie,
- un manchon axial relié de manière étanche au conduit de la base et qui fait partie d'une interface de fixation métallique pour le contact avec la cartouche filtrante.

Ce type de support de montage est connu par exemple du document US2877902. L'interface de connexion décrite dans ce document présente un insert central délimitant le manchon axial communiquant avec un passage d'entrée de liquide brut et une pièce périphérique pourvue d'une sortie communiquant avec un passage de sortie de liquide purifié de la cartouche sertie. Le montage de l'interface de connexion sur la base métallique est réalisé par vissage de l'insert central dans un filetage interne formé dans un orifice central de la base. Ce genre d'interface de connexion permet de fixer rapidement et facilement la cartouche filtrante, et convient pour l'utilisation de cartouches filtrantes conventionnelles (de type spin-on) dont le boîtier est formé à partir d'une fine couche de métal. '

Le système décrit dans le document US2877902 nécessite le montage de plusieurs pièces dans le bloc moteur et impose donc au constructeur d'assembler des pièces dans la fonderie de ce bloc moteur. Ce système est donc complexe et couteux. Le document US3300049 décrit un kit d'adaptation pour cartouche filtrante, ce kit devant se monter dans la base. Un inconvénient de ce type de kit est également la complexité d'assemblage de l'interface de connexion, avec une combinaison de pièces métalliques et de joints pour le contact avec la base.

Par ailleurs la base et l'interface de fixation associée présentent souvent un encombrement important et la masse métallique formé par l'ensemble est particulièrement lourde. Ceci ne facilite pas les opérations d'assemblage et a un impact négatif sur le poids du véhicule.

La présente invention a notamment pour but de pallier un ou plusieurs des inconvénients rencontrés avec les systèmes de montage de cartouches filtrantes à montage rapide (appelées "spin-on" par l'homme du métier, et qui peuvent se visser ou se fixer par une connexion de type baïonnette).

A cet effet il est proposé selon l'invention un support de montage du type précité (et utilisable pour divers moteurs de véhicules), dans lequel la base est en matière plastique et l'interface de fixation métallique comprend :
- le manchon axial, métallique, qui définit un passage axial communiquant par une première extrémité du manchon avec l'une parmi l'entrée et la sortie de la base, une première zone d'étanchéité annulaire étant formée entre la base et le manchon axial de l'interface de fixation, le manchon axial présentant des moyens de fixation choisis parmi un filetage, des ergots ou des crans à une deuxième extrémité permettant de fixer la cartouche filtrante,
- une portion externe annulaire, métallique, solidaire du manchon axial et connectée de manière étanche à la base en formant une deuxième zone d'étanchéité annulaire entre la base et l'interface de fixation, à distance de la première zone d'étanchéité annulaire, et
- au moins une ouverture permettant une circulation de liquide entre les première et deuxième zones d'étanchéité, cette ouverture communiquant avec l'autre parmi ladite entrée et ladite sortie de la base. De préférence, l'interface de fixation est une pièce monobloc, de sorte que la portion externe annulaire est directement solidaire du manchon axial.

Grâce à ces dispositions, le nombre de pièces à assembler est réduit. Il est également permis d'utiliser un support de montage plus léger tout en bénéficiant d'une rigidité de l'interface de fixation (et d'un état de surface qui reste bon après plusieurs montages et démontages de cartouches), ce qui favorise l'obtention d'une étanchéité axiale satisfaisante avec la cartouche filtrante. Un compromis avantageux est obtenu entre utilisation de plastique pour la base, ce qui en réduit le poids, et la simplicité et la robustesse de la connexion d'une cartouche spin-on de type standard (dont le boîtier externe est typiquement métallique).

Selon une particularité, le manchon axial présente un axe central et le support comprend des moyens anti-rotation formés sur l'une et sur l'autre de la base et de l'interface de fixation afin de prévenir la rotation autour de l'axe central de l'interface de fixation) par rapport à la base. Avec cette disposition, on comprend que l'interface de fixation demeure inséparable de la base et donc forme une partie robuste du support.

Dans divers modes de réalisation du support de montage selon l'invention, on peut éventuellement avoir recours en outre à l'une et/ou à l'autre des dispositions suivantes :
- les moyens anti-rotation présentent une encoche formée sur le manchon et une projection saillante complémentaire formée sur une face interne du conduit de la base (le système avec encoche permet en outre de guider l'insertion de l'extrémité inférieure du manchon dans le conduit associé de la base).
- l'interface de fixation présente une pluralité d'entretoises entre le manchon et la portion externe annulaire, les ouvertures étant agencées respectivement entre deux entretoises adjacentes, dans un espace annulaire formé entre le manchon et la portion externe annulaire (cette disposition permet d'obtenir une pièce avec une périphérie importante en minimisant la quantité de matière, utilisée dans l'espace entre le manchon et la portion externe annulaire).
- les moyens anti-rotation comprennent des projections saillantes formées intégralement avec la base, chacune des entretoises s'étendant au travers d'un espace formé entre deux projections saillantes adjacentes (ainsi, un tel blocage anti-rotation peut être réalisé à distance des zones d'étanchéité annulaire, par exemple du côté des extrémités internes des entretoises).
- la première extrémité du manchon axial fait saillie axialement vers l'extérieur depuis un plan transversal défini par une face supérieure de la portion externe annulaire pour former un organe de connexion mâle, de préférence pourvu d'un filetage.
- la première extrémité du manchon est soudée au conduit de la base, la zone de soudage formant ladite première zone d'étanchéité.
- la portion externe annulaire de l'interface de fixation présente une face externe sur laquelle est formée une gorge périphérique débouchant radialement vers l'extérieur, un joint annulaire étant agencé dans la gorge et prenant appui contre une paroi tubulaire de la base pour former ladite deuxième zone d'étanchéité annulaire.
- la base comporte un col interne qui entoure le manchon axial, la portion externe annulaire s'étendant autour du col interne.

Par ailleurs, l'invention a également pour objet un filtre à liquide de poids relativement faible et utilisant des cartouches de type standard.

A cet effet, il est proposé un filtre à liquide comprenant une cartouche filtrante et un support de montage pour la cartouche filtrante, le support comprenant une base en matière légère comme le plastique, la cartouche filtrante comportant un boîtier externe (de préférence métallique) délimitant un volume intérieur contenant un élément filtrant qui sépare ledit volume intérieur en un espace amont et un espace aval, le boîtier comprenant un fond délimitant au moins un passage d'entrée de liquide communiquant avec l'espace amont et un passage de sortie de liquide communiquant avec l'espace aval, le boîtier étant adapté pour être monté sur le support qui comporte un canal d'entrée de liquide prévu pour communiquer avec le passage d'entrée et un canal de sortie de liquide prévu pour communiquer avec le passage de sortie, le support de montage étant tel que défini selon l'invention. Ainsi, le filtre peut présenter une rigidité satisfaisante pour les surfaces de contact pouvant être sollicitées de manière répétée lors de la connexion ou déconnexion entre l'interface du support et la cartouche.

Selon une particularité, le support comporte un échangeur de chaleur, la base présentant dans le prolongement du conduit axial une portion de support de l'échangeur de chaleur.

Selon une autre particularité, la portion externe annulaire de l'interface de fixation présente un diamètre externe sensiblement égal au diamètre externe du boîtier de la cartouche. Ainsi, l'interface de fixation n'ajoute pas d'encombrement supplémentaire dans la direction radiale par rapport au boîtier de la cartouche.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue en coupe longitudinale montrant un filtre conforme à l'invention, avec la cartouche filtrante montée sur le support de montage ;
- la figure 2 est une vue en perspective illustrant l'interface de fixation du support de montage de la figure 1 ;
- la figure 3 est un agrandissement de la figure 1 qui montre la fixation de la cartouche filtrante sur le support de montage par utilisation de l'interface de fixation ;
- la figure 4 est une vue de dessus d'un support de montage conforme à l'invention, montrant l'interface de fixation raccordée sur la base du support ; et
- la figure 5 montre une vue externe d'un filtre conforme à l'invention.

Sur les différentes figures, les mêmes références désignent des éléments identiques ou similaires.

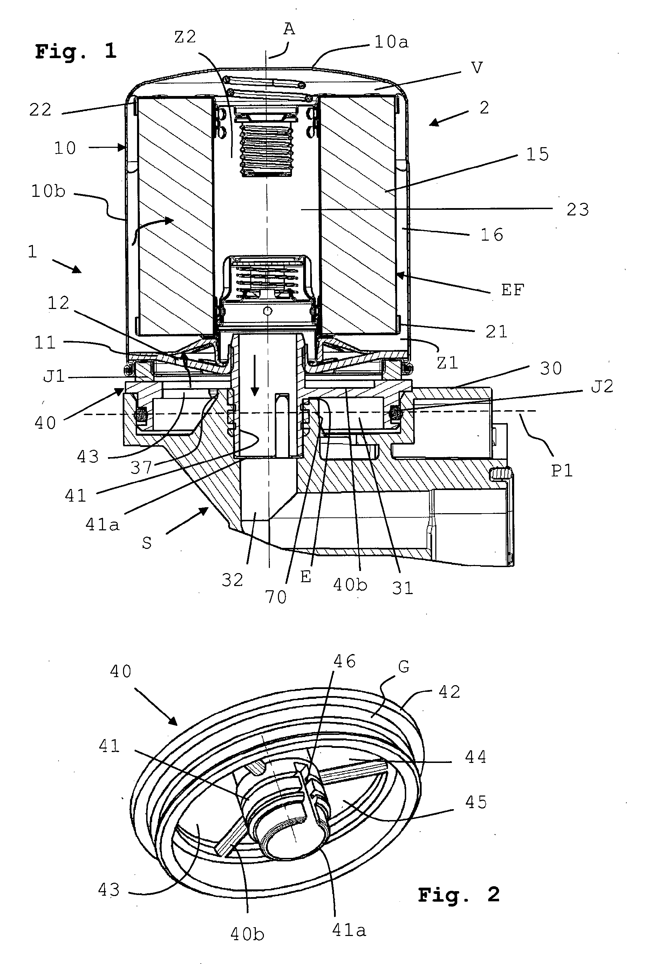

En référence aux figures 1 et 2, le filtre à liquide 1 comporte un support S réutilisable et une cartouche filtrante 2. Comme cela est visible sur la figure 1, la cartouche filtrante 2 comporte un boîtier 10 externe délimitant un volume intérieur V contenant un élément filtrant EF. Le boîtier 10 peut comporter un sommet bombé 10a et une paroi latérale 10b s'étendant autour de l'élément filtrant EF depuis le sommet bombé 10a jusqu'à une extrémité inférieure 11 du boîtier 10. La paroi latérale 10b est de préférence sensiblement cylindrique et dépourvue d'ouverture, l'entrée de liquide 12 et la sortie de liquide 13 étant agencées dans l'extrémité inférieure 11. L'extrémité inférieure 11 est ici constituée par une paroi formant le fond de la cartouche filtrante 2

Dans l'exemple non limitatif de la figure 1, l'élément filtrant EF comporte un flasque inférieur 21, un flasque supérieur 22 et un média filtrant 15 à travers lequel peut passer le liquide à filtrer, par exemple de l'huile de lubrification. Le média filtrant 15 délimite un espace intérieur 23 creux.

L'élément filtrant EF sépare le volume intérieur V en un espace amont Z1 et un espace aval Z2. L'élément filtrant EF est sensiblement tubulaire. L'espace amont Z1 correspond à un espace d'entrée de l'huile dans la cartouche 2, avant filtration, en partie basse du filtre 1 et sur la périphérie (espace annulaire 16 formé autour du média filtrant 15). L'espace aval Z2 correspond à l'espace intérieur 23 dans lequel circule l'huile filtrée.

De façon connue en soi, le média filtrant 15 est interposé entre le flasque inférieur 21 et le flasque supérieur 22 et permet de filtrer les impuretés contenues dans l'huile. Le média filtrant 15 présente ici une forme annulaire en s'étendant autour d'un axe central A qui définit une direction longitudinale de la cartouche 2.

L'extrémité inférieure 11 délimite au moins un passage d'entrée de liquide qui comporte de préférence une pluralité d'orifices 12 ménagés dans le fond du boîtier 10. Les orifices 12 communiquent avec la périphérie du volume intérieur V de sorte que le liquide brut peut circuler dans l'espace annulaire 16. Cette communication se fait par l'intermédiaire d'un clapet anti-retour M situé dans le bas du boîtier 10. Ce clapet M peut se présenter sous la forme d'une membrane flexible. Dans cet exemple la membrane est plus mince du côté de son bord périphérique. La membrane du clapet M est ouverte lorsque du liquide circule sous pression depuis un canal d'entrée 31 vers le volume intérieur V du boîtier 10.

Comme cela est visible sur les figures 1, 3 et 5, la cartouche 2 est prévue pour être montée sur un support S aménagé sur un bloc moteur et qui comporte un canal d'entrée 31 et un canal de sortie 32. L'extrémité 11 formant le fond du boîtier 10 comporte aussi un passage de sortie 34 qui est central, avec un filetage 35 pour la fixation de la cartouche 2 sur un manchon axial 41 du canal de sortie 32 du support S. La pluralité d'orifices 12 du passage d'entrée est donc située autour du passage de sortie 34 de la cartouche 2. Un joint J1 par exemple de type à section carrée est rapporté sur la surface externe de l'extrémité inférieure 31, afin de réaliser l'étanchéité autour de l'espace intercalaire formé entre les orifices 12 du fond de la cartouche 2 et le débouché du canal d'entrée 31. Le joint J1 est ici reçu dans une gorge adjacente à la zone de sertissage de la cartouche 2. Bien entendu, d'autres modes de fixation du joint J1 sur la cartouche 2 peuvent être utilisés

Le support S présente ici une base 30 raccordée au circuit de lubrification pour un moteur à combustion interne et une interface de fixation 40 formée d'une pièce pour fixer la cartouche filtrante 2. L'entrée 31 pour le liquide de lubrification brut et la sortie 32 pour le liquide de lubrification purifié sont ici formées dans la base 30 du support S. Un joint J2 de type torique ou analogue peut être utilisé pour réaliser l'étanchéité autour de l'interface de fixation 40, dans une zone annulaire en retrait (vers l'intérieur de la base 30) par rapport à la surface d'étanchéité 40a en contact avec le joint J1. La base 30 est ici en matière plastique moulée, ce qui permet d'alléger le poids du circuit de lubrification.

Comme cela est visible sur les figures 2, 3 et 4, l'interface de fixation 40 comprend :
- un manchon axial 41, métallique, s'étendant entre une première extrémité 41a inférieure insérée dans le conduit axial C correspondant de la base 30 (lequel conduit axial définit la sortie 32 dans cet exemple non limitatif) et une deuxième extrémité 41b supérieure formant un connecteur pour la cartouche 2,
- une portion externe annulaire 42, métallique, solidaire du manchon axial 41 et connectée de manière étanche à la base 30, et
- une ou plusieurs ouvertures 43, 44, 45 agencées entre le manchon axial 41 et la portion externe annulaire 42 pour permettre une circulation de liquide décentrée depuis l'entrée 31 vers le passage d'entrée de la cartouche 2.

La conception monobloc est préférée car la mise en place et l'ancrage étanche de l'interface de fixation 40 sont particulièrement aisés. Dans une variante de réalisation, l'interface de fixation 40 peut aussi être obtenue en interconnectant deux pièces métalliques avec par exemple une jonction à distance des zones d'étanchéité (éventuellement au niveau d'entretoises 40b).

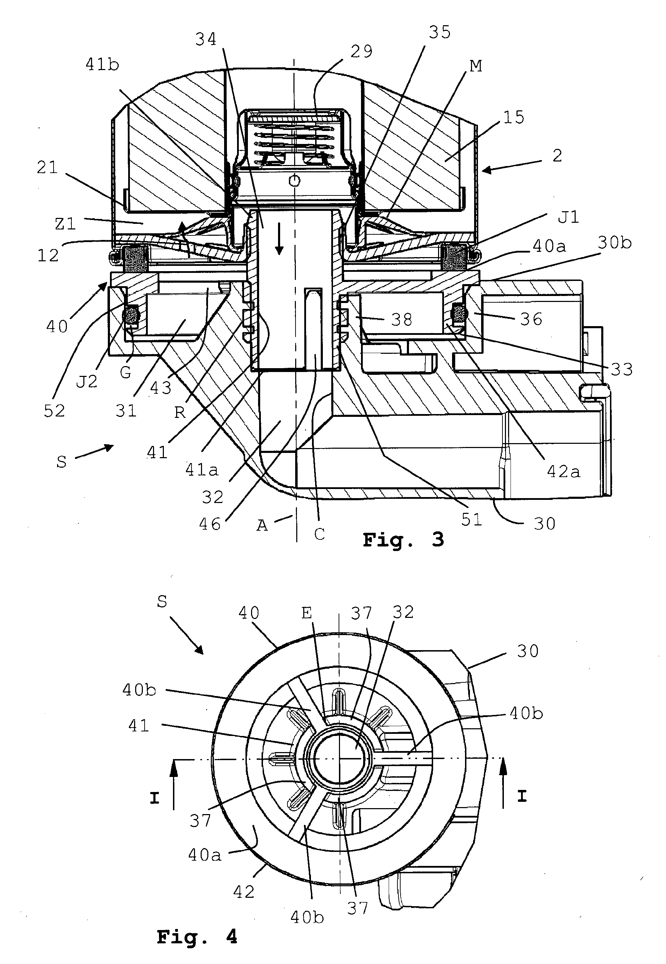

Comme cela est visible en particulier sur la figure 3, le manchon 41 définit intérieurement un passage axial dans le prolongement du conduit axial C. Dans la position montée de la cartouche 2 comme montré dans l'exemple des figures 1 et 3, le passage axial débouche ici au niveau de sa deuxième extrémité 41b dans le volume intérieur V. Ce débouché peut éventuellement affleurer ou être situé dans l'espace intérieur 23 délimité par le média filtrant 15. Dans ce cas, le manchon 41 s'étend autour d'un axe de révolution qui est confondu avec l'axe central A dans la position montée de la cartouche 2. Le manchon 41 est relié de manière étanche au conduit axial C de la base 30, une première zone d'étanchéité annulaire 51 entre la base 30 et l'interface de fixation 40 étant par exemple formée autour du manchon axial 41, de préférence du côté de la première extrémité 41a. Dans une variante de réalisation ou à titre additionnel, un contact d'étanchéité peut être aussi réalisé au niveau du bord libre de la première extrémité 41a du manchon 41, le conduit C pouvant présenter dans ce cas un épaulement formant une surface d'étanchéité.

La portion externe annulaire 42 est connectée de manière étanche à la base 30, à distance de la première zone d'étanchéité annulaire 51. La portion externe 42 de l'interface de fixation 40 présente ainsi une gorge périphérique G formée sur sa face externe. Le joint J2 est placé dans cette gorge G et prend appui sur une paroi 36, ici cylindrique, de la base 30. Cette paroi 36 délimite un évidement de forme annulaire formé dans la base 30, appelé dans ce qui suit logement d'entrée annulaire 33, permettant de loger une extrémité inférieure de la portion externe annulaire 42. La gorge G est agencée dans cette extrémité inférieure. On comprend qu'une deuxième zone d'étanchéité annulaire 52 entre la base 30 et l'interface de fixation 40 est formée par l'intermédiaire du joint J2 coincé entre l'extrémité inférieure 42a et la paroi 36.

Les ouvertures 43, 44, 45 qui sont formées entre la zone d'étanchéité 51 et la deuxième zone d'étanchéité 52 permettent à l'entrée 31 sont ici relativement larges et permettent de communiquer avec le passage d'entrée de la cartouche 2. L'interface de fixation 40 présente ici trois entretoises 40b reliant le manchon 41 à la portion externe annulaire 42. L'interface de fixation 40 est constituée d'une pièce métallique, par exemple à base d'aluminium ou d'acier, de sorte que le contact avec la cartouche 2 peut être du type métal-métal lorsque la cartouche est montée (par exemple par vissage) sur le support S.

Dans l'exemple des figures 1 et 3, l'organe femelle pourvu d'un filetage 35 formé sur la cartouche 2 coopère avec la deuxième extrémité 41b du manchon 41, également pourvue d'un filetage pour former l'organe mâle de la connexion étanche. Tandis que la fixation de la cartouche 2 est réalisée par des moyens de fixation amovible, la fixation de l'interface de fixation 40 dans la base 30 est une connexion permanente et qui peut être réalisée par un traitement thermique de la première extrémité 41a du manchon 41 insérée dans le conduit axial C. Dans un mode de réalisation préféré, l'ancrage de l'interface de fixation 40 métallique dans la base 30 plastique est réalisé par un soudage par induction (l'induction électromagnétique chauffant la première extrémité 41a de l'interface de fixation 40).

Des moyens anti-rotation sont prévus pour maintenir une position angulaire prédéterminée de l'interface de fixation 40 soudée ou raccordée par toute autre méthode dans la base 30, de façon à prévenir l'arrachement de l'interface de connexion 40. A titre d'exemple non limitatif, le manchon 41 présente une ou plusieurs encoches 46 qui s'engagent avec des projections saillantes formées sur la face interne du conduit axial C. L'encoche 46 visible sur les figures 1 à 3 débouche axialement du côté de la première extrémité 41a et présente une forme allongée. Dans cet exemple, la première extrémité 41a présente une ouverture axiale débouchant directement dans le conduit axial C. Comme cela est bien visible sur la figure 1 et sur la figure 3, la base 30 peut présenter un col interne 70 (venu de matière avec la base 30) qui s'étend de façon annulaire autour du manchon 41. Ce col interne 70 améliore l'ancrage de l'interface de fixation 40 et permet de réduire très significativement la longueur du manchon 41. On peut voir aussi qu'il existe un plan virtuel P1 perpendiculaire à l'axe central A qui traverse à la fois le col interne 70 et le joint J2 qui s'étend le long d'une circonférence externe de l'interface de fixation 40. Avec ces dispositions, on augmente la surface de contact entre la base 30 et le manchon 41. On obtient en encombrement en hauteur très réduit de l'interface de fixation 40 sans requérir de pièces de fixation additionnelles (pas d'écrou par exemple).

En référence aux figures 1 à 4, la rotation de l'interface de fixation 40 est également empêchée par les entretoises 40b qui viennent en prise avec des projections saillantes 37 venues de forme avec la base 30. Ces projections 37 sont formées ici sur la face supérieure de la portion centrale de raccord 38 de la base 30 qui définit l'extrémité supérieure du conduit axial C. Cette portion centrale de raccord 38 fait elle-même saillie dans l'espace annulaire formé entre le manchon 41 et la portion externe annulaire 42. Ainsi dans cet exemple non limitatif, la portion centrale de raccord 38 comprend d'une part le col interne 70, et d'autre part une portion inférieure annulaire dans le prolongement axial du col interne 70. Les projections 37 sont réparties de façon annulaire avec des espaces E respectifs entre deux projections adjacentes. Chacune des entretoises 40b est placée, lors de l'intégration dans le support S de l'interface de fixation 40, au travers d'un des espaces E.

Comme cela est visible sur la figure 4, la partie des entretoises 40b adjacente au manchon 41 est serrée entre deux projections 37, ce qui empêche la rotation de l'interface de fixation 40 autour de l'axe central A lors des opérations de montage/démontage de la cartouche 2.

L'enfoncement du manchon 41 dans le conduit axial C peut être limité par des moyens de butée. Dans l'exemple de réalisation représenté, les moyens de butée comprennent un épaulement extérieur annulaire formé sur la face externe de la portion annulaire externe 42. Cet épaulement vient en appui sur la surface supérieure 30b de la base 30, en ne pénétrant pas dans le logement d'entrée annulaire 33. En outre, la première extrémité 41a du manchon 41 peut présenter des reliefs saillants R qui s'engagent avec la face interne du conduit axial C. Avantageusement l'ancrage de l'interface de fixation 40 dans la portion centrale 38 de la base 30 peut être ainsi amélioré en réalisant un moletage ou une forme de type "sapin" au niveau de la surface externe du manchon 41 (du côté de la de la première extrémité 41a comme cela est visible sur les figures 1 et 3).

Le montage de la cartouche filtrante 2 sur le support S va à présent être décrit en liaison avec les figures 1-3.

L'interface de fixation 40, formée d'une seule pièce, est solidaire de la base 30 et définit ici l'ensemble des surfaces de contact avec la cartouche 2 de type "spin-on". La portion annulaire externe 42 de l'interface de fixation 40 présente une surface d'étanchéité 40a sur laquelle le joint J1 de la cartouche 2 (ou autre moyens d'étanchéité équivalents) vient s'appuyer 2 lorsque l'opérateur visse ou connecte de façon similaire la cartouche 2 sur l'interface de fixation 40. La surface d'étanchéité 40a, qui est sensiblement plane, est définie par la face supérieure de la portion annulaire externe 42.

La cartouche filtrante 2, ici de type sertie, s'étend longitudinalement selon l'axe central A. L'extrémité inférieure 11 du boîtier 10 peut être métallique et le filetage 35 est de préférence coaxial à l'axe central A, de sorte que le filetage complémentaire du manchon 41 s'étend autour du même axe central A pour permettre un vissage conventionnel.

La rigidité du manchon 41 permet un vissage d'une cartouche à boîtier 10 métallique sans altération du filetage 35, ce qui garantit une bonne étanchéité autour du passage de sortie 34. Les moyens anti-rotation (37, 40b ; 46), formés ici entre la face externe du manchon 41 et la face interne de la portion externe annulaire 42 et/ou dans la zone de contact entre le manchon 41 et le conduit axial C, permettent de réaliser le vissage sans rotation de l'interface de fixation 40, et cela malgré le couple de serrage.

Lorsque la cartouche 2 est montée serrée sur le support S, en position de fonctionnement normal tel que représenté aux figures 1 et 3, le canal d'entrée 31 de la base 30 du support S communique avec le passage d'entrée de la cartouche via les ouvertures 43, 44 ,45. Le canal de sortie 32 de la base 30 du support S communique avec le passage de sortie 34 de la cartouche 2 par le bais du passage axial du manchon 41.

La cartouche 2 peut être démontée de son support S. Dans ce cas, le clapet anti-drain 29 relié au passage de sortie 34 est fermé pour éviter que le volume intérieur du filtre se vide par le passage de sortie 34. Ce clapet anti-drain 29 agencé dans l'espace aval Z2 s'ouvre, de façon connue en soi, uniquement lorsqu'il règne dans l'espace aval une pression supérieure à une valeur prédéterminée. La membrane du clapet anti retour M est fermée pour éviter que le volume intérieur du filtre se vide par le passage d'entrée.

On comprend que l'opération de montage est rapide et reste conventionnelle pour l'opérateur. Le démontage est également classique. L'usure liée aux opérations de montage et démontage de la cartouche filtrante 2, pour le support S avec sa base 30 en plastique, est comparable à l'usure constatée avec un support de type entièrement métallique.

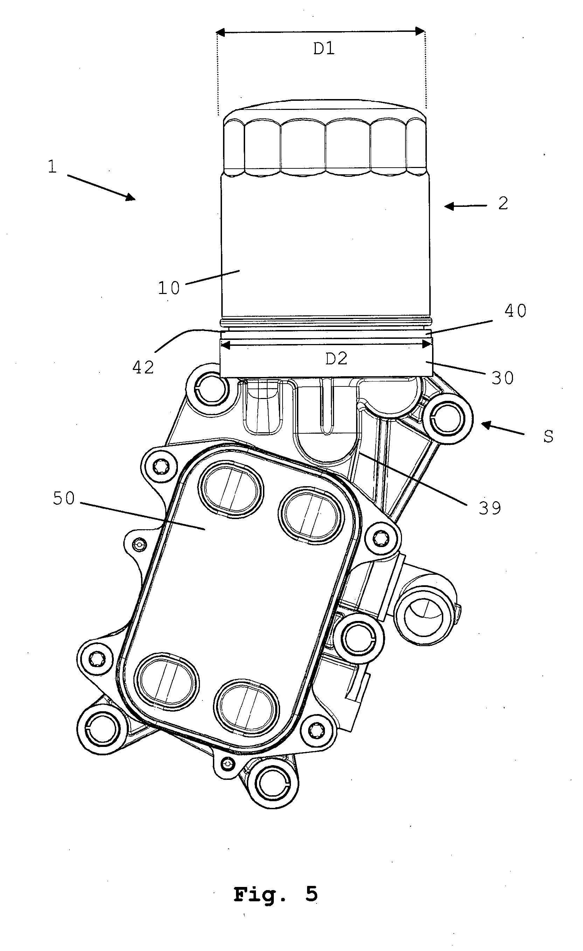

En référence à la figure 5, la base 30 fabriquée à partir de matière plastique présente dans le prolongement dudit conduit axial C une portion 39 de support d'un échangeur de chaleur 50. Cet échangeur 50 peut être d'un type conventionnel pour échanger de la chaleur entre de l'eau ou liquide similaire de refroidissement et le liquide de lubrification à filtrer. Ainsi on comprend que le support S peut faire aussi office d'échangeur eau-huile.

La portion externe annulaire 42 de l'interface de fixation 40 présente un diamètre externe D2 sensiblement égal au diamètre externe D1 du boîtier 10 de la cartouche 2. Seul l'épaulement extérieur annulaire de l'interface de fixation 40 est visible depuis l'extérieur du filtre 1 dans la position montée de la cartouche 2. On comprend donc que l'encombrement additionnel engendré par l'interface de fixation 40 est très faible.

Il doit être évident pour les personnes versées dans l'art que la présente invention permet des modes de réalisation sous de nombreuses autres formes spécifiques sans l'éloigner du domaine d'application de l'invention comme revendiqué. Par exemple, l'interface de fixation 40 peut alternativement présenter un organe femelle de vissage ou fixation comparable, l'extrémité inférieure 11 de la cartouche 2 présentant dans ce cas un organe mâle complémentaire ou mamelon similaire.

## Revendications

1. Support (S) de montage pour une cartouche filtrante (2) pourvue d'un boîtier externe, en particulier une cartouche sertie, ledit support présentant :
- une base (30) destinée à être raccordée à un circuit de lubrification pour un moteur à combustion interne, la base (30) présentant une entrée (31) pour liquide de lubrification brut, une sortie (32) pour liquide de lubrification purifié et un conduit (C) communiquant avec l'une parmi ladite entrée (31) et ladite sortie (32),
- un manchon axial (41) relié de manière étanche audit conduit (C), ledit manchon axial (41) faisant partie d'une interface de fixation (40) métallique pour le contact avec la cartouche filtrante (2),
**caractérisé en ce que** la base (30) est en matière plastique,
**et en ce que** ladite interface de fixation (40) comprend :
- ledit manchon axial (41), métallique, qui définit un passage axial communiquant par une première extrémité (41a) du manchon axial avec l'une parmi ladite entrée (31) et ladite sortie (32) de la base, une première zone d'étanchéité annulaire (51) étant formée entre la base (30) et le manchon axial (41) de l'interface de fixation (40), le manchon axial présentant des moyens de fixation choisis parmi un filetage, des ergots ou des crans à une deuxième extrémité (41b) permettant de fixer la cartouche filtrante (2),
- une portion externe annulaire (42), métallique, solidaire du manchon axial (41) et connectée de manière étanche à la base en formant une deuxième zone d'étanchéité annulaire (52) entre la base (30) et l'interface de fixation (40), à distance de la première zone d'étanchéité annulaire (51), et
- au moins une ouverture (43, 44, 45) permettant une circulation de liquide entre les première et deuxième zones d'étanchéité (51, 52), ladite ouverture communiquant avec l'autre parmi ladite entrée (31) et ladite sortie (32) de la base (30).

2. Support (S) selon la revendication 1, dans lequel l'interface de fixation (40) est une pièce monobloc métallique.

3. Support (S) selon la revendication 2, dans lequel le manchon axial (41) est directement inséré par sa première extrémité (41a) dans un conduit (C) de la base (30), la première zone d'étanchéité annulaire (51) étant formée autour du manchon axial.

4. Support (S) selon la revendication 2 ou 3, dans lequel le manchon axial (41) présente un axe central (A), le support (S) comprenant des moyens anti-rotation (37, 40b ; 46) formés sur l'une et sur l'autre de la base (30) et de l'interface de fixation (40) pour prévenir la rotation de l'interface de fixation (40) par rapport à la base (30) autour de l'axe central (A).

5. Support (S) selon la revendication 4, dans lequel les moyens anti-rotation présentent une encoche (46) formée sur le manchon axial (41) et une projection saillante complémentaire formée sur une face interne du conduit (C) de la base (30).

6. Support (S) selon l'une quelconque des revendications précédentes, dans lequel l'interface de fixation (40) présente une pluralité d'entretoises (40b) entre le manchon axial (41) et la portion externe annulaire (42), les ouvertures (43, 44, 45) étant agencées respectivement entre deux entretoises adjacentes, dans un espace annulaire formé entre le manchon axial (41) et la portion externe annulaire (42).

7. Support (S) selon la revendication 4 ou 5, dans lequel l'interface de fixation (40) présente une pluralité d'entretoises (40b) et les moyens anti-rotation comprennent des projections saillantes (37) formées intégralement avec la base (30), chacune des entretoises (40b) s'étendant au travers d'un espace (E) formé entre deux projections saillantes (37) adjacentes.

8. Support (S) selon l'une quelconque des revendications précédentes, dans lequel la première extrémité (41a) du manchon axial (41) fait saillie axialement vers l'extérieur depuis un plan transversal défini par une face supérieure (40a) de la portion externe annulaire (42) pour former un organe de connexion mâle, de préférence pourvu d'un filetage (35).

9. Support (S) selon l'une quelconque des revendications précédentes, dans lequel la première extrémité (41a) du manchon axial (41) est soudée au conduit (C) de la base, la zone de soudage formant ladite première zone d'étanchéité (51).

10. Support (S) selon l'une quelconque des revendications précédentes, dans lequel la portion externe annulaire (42) de l'interface de fixation (40) présente une face externe sur laquelle est formée une gorge périphérique (G) débouchant radialement vers l'extérieur, un joint annulaire (J2) étant agencé dans la gorge (G) et prenant appui contre une paroi (36) tubulaire de la base (30) pour former ladite deuxième zone d'étanchéité annulaire (52).

11. Support (S) selon la revendication 10, dans lequel la base (30) comporte un col interne (70) qui entoure le manchon axial (41), la portion externe annulaire (42) s'étendant autour du col interne (70).

12. Filtre à liquide (1) comprenant un support de montage (S) selon l'une quelconque des revendications précédentes et une cartouche filtrante (2) fixée de manière amovible sur le support, la cartouche filtrante comportant un boîtier externe (10) délimitant un volume intérieur (V) contenant un élément filtrant (EF) qui sépare ledit volume intérieur en un espace amont (Z1) et un espace aval (Z2), le boîtier comprenant un fond (11) délimitant au moins un passage d'entrée de liquide communiquant avec l'espace amont (Z1) et un passage de sortie de liquide communiquant avec l'espace aval (Z2), ledit boîtier (10) étant adapté pour être monté sur le support (S) qui comporte un canal d'entrée de liquide (31) prévu pour communiquer avec le passage d'entrée (12) et un canal de sortie de liquide (32) prévu pour communiquer avec le passage de sortie (34).

13. Filtre (1) selon la revendication 12, dans lequel la portion externe annulaire (42) de l'interface de fixation (40) présente un diamètre externe (D2) sensiblement égal au diamètre externe (D1) du boîtier (10) de la cartouche (2).

## Patentansprüche

1. Montageträger (S) für eine Filterpatrone (2), die mit einem äußeren Gehäuse versehen ist, insbesondere eine angequetschte Patrone, wobei der Träger Folgendes aufweist:
- eine Basis (30), die zur Verbindung mit einem Schmierkreislauf für einen Verbrennungsmotor bestimmt ist, wobei die Basis (30) einen Eingang (31) für rohe Schmierflüssigkeit, einen Ausgang (32) für gereinigte Schmierflüssigkeit und eine Leitung (C), die mit dem Eingang (31) oder dem Ausgang (32) in Verbindung steht, aufweist,
- eine axiale Hülse (41), die dicht mit der Leitung (C) verbunden ist, wobei die axiale Hülse (41) einen Teil einer metallischen Befestigungsgrenzfläche (40) für den Kontakt mit der Filterpatrone (2) bildet, **dadurch gekennzeichnet, dass** die Basis (30) aus einem Kunststoffmaterial besteht,
und dass die Befestigungsgrenzfläche (40) Folgendes umfasst:
- die metallische axiale Hülse (41), die einen axialen Durchgang definiert, der durch ein erstes Ende (41a) der axialen Hülse mit dem Eingang (31) oder dem Ausgang (32) der Basis in Verbindung steht, einen ersten ringförmigen Dichtungsbereich (51), der zwischen der Basis (30) und der axialen Hülse (41) der Befestigungsgrenzfläche (40) gebildet ist, wobei die axiale Hülse Befestigungsmittel aufweist, die zwischen einem Gewinde, Zapfen oder Verzahnungen, die an einem zweiten Ende (41b) vorgesehen sind, ausgewählt sind und die Befestigung der Filterpatrone (2) gestatten,
- einen ringförmigen äußeren metallischen Teil (42), der fest an der axialen Hülse (41) angebracht und dicht mit der Basis verbunden ist, wodurch ein zweiter ringförmiger Dichtungsbereich (52) zwischen der Basis (30) und der Befestigungsgrenzfläche (40) in einem Abstand zu dem ersten ringförmigen Dichtungsbereich (51) gebildet wird, und
- mindestens eine Öffnung (43, 44, 45), die eine Flüssigkeitszirkulation zwischen dem ersten und dem zweiten Dichtungsbereich (51, 52) gestattet, wobei die Öffnung mit dem jeweils anderen des Eingangs (31) und des Ausgangs (32) der Basis (30) in Verbindung steht.

2. Träger (S) nach Anspruch 1, wobei die Befestigungsgrenzfläche (40) ein einstückiges Metallteil ist.

3. Träger (S) nach Anspruch 2, wobei die axiale Hülse (41) mit ihrem ersten Ende (41a) direkt in eine Leitung (C) der Basis (30) eingeführt wird, wobei der erste ringförmige Dichtungsbereich (51) um die axiale Hülse herum ausgebildet ist.

4. Träger (S) nach Anspruch 2 oder 3, wobei die axiale Hülse (41) eine mittlere Achse (A) aufweist, wobei der Träger (S) Verdrehsicherungsmittel (37, 40b; 46) umfasst, die sowohl an der Basis (30) als auch an der Befestigungsgrenzfläche (40) ausgebildet sind, um die Drehung der Befestigungsgrenzfläche (40) bezüglich der Basis (30) um die mittlere Achse (A) zu verhindern.

5. Träger (S) nach Anspruch 4, wobei die Verdrehsicherungsmittel eine Kerbe (46), die in der axialen Hülse (41) ausgebildet ist, und einen komplementären vorstehenden Vorsprung, der an einer Innenfläche der Leitung (C) der Basis (30) ausgebildet ist, aufweist.

6. Träger (S) nach einem der vorhergehenden Ansprüche, wobei die Befestigungsgrenzfläche (40) mehrere Stege (40b) zwischen der axialen Hülse (41) und dem ringförmigen äußeren Teil (42) aufweist, wobei die Öffnungen (43, 44, 45) jeweils zwischen zwei benachbarten Stegen in einem zwischen der axialen Hülse (41) und dem ringförmigen äußeren Teil (42) ausgebildeten Ringraum angeordnet sind.

7. Träger (S) nach Anspruch 4 oder 5, wobei die Befestigungsgrenzfläche (40) mehrere Stege (40b) aufweist und die Verdrehsicherungsmittel vorstehende Vorsprünge (37) umfassen, die integral mit der Basis (30) ausgebildet sind, wobei sich jeder der Stege (40b) durch einen zwischen zwei benachbarten vorstehenden Vorsprüngen (37) gebildeten Raum (E) erstreckt.

8. Träger (S) nach einem der vorhergehenden Ansprüche, wobei das erste Ende (41a) der axialen Hülse (41) von einer durch eine Oberseite (40a) des ringförmigen äußeren Teils (42) definierten Querebene axial nach außen vorsteht, um ein Steck-Verbindungsglied zu bilden, das vorzugsweise mit einem Gewinde (35) versehen ist.

9. Träger (S) nach einem der vorhergehenden Ansprüche, wobei das erste Ende (41a) der axialen Hülse (41) mit der Leitung (C) der Basis verschweißt ist, wobei der Schweißbereich den ersten Dichtungsbereich (51) bildet.

10. Träger (S) nach einem der vorhergehenden Ansprüche, wobei der ringförmige äußere Teil (42) der Befestigungsgrenzfläche (40) eine Außenseite aufweist, in der eine Umfangsnut (G) ausgebildet ist, die radial zur Außenseite führt, wobei ein Dichtungsring (J2) in der Nut (G) angeordnet ist und sich an einer röhrenförmigen Wand (36) der Basis (30) abstützt, um den zweiten ringförmigen Dichtungsbereich (52) zu bilden.

11. Träger (S) nach Anspruch 10, wobei die Basis (30) einen inneren Kragen (70) aufweist, der die axiale Hülse (41) umgibt, wobei sich der ringförmige äußere Teil (42) um den inneren Kragen (70) erstreckt.

12. Flüssigkeitsfilter (1), der einen Montageträger (S) nach einem der vorhergehenden Ansprüche und eine Filterpatrone (2), die lösbar an dem Träger befestigt ist, umfasst, wobei die Filterpatrone ein äußeres Gehäuse (10) umfasst, das ein Innenvolumen (V) begrenzt, das ein Filterelement (EF) enthält, welches das Innenvolumen in einen stromaufwärtigen Raum (Z1) und einen stromabwärtigen Raum (Z2) trennt, wobei das Gehäuse einen Boden (11) umfasst, der mindestens einen Flüssigkeitseintrittsdurchgang, der mit dem stromaufwärtigen Raum (Z1) in Verbindung steht, und einen Flüssigkeitsaustrittsdurchgang, der mit dem stromabwärtigen Raum (Z2) in Verbindung steht, umfasst, wobei das Gehäuse (10) zum Anbringen an dem Träger (S) ausgeführt ist, der einen Flüssigkeitseintrittskanal (31), der zur Verbindung mit dem Eintrittsdurchgang (12) vorgesehen ist, und einen Flüssigkeitsaustrittskanal (32), der zur Verbindung mit dem Austrittsdurchgang (34) vorgesehen ist, aufweist.

13. Filter (1) nach Anspruch 12, wobei der ringförmige äußere Teil (42) der Befestigungsgrenzfläche (40) einen Außendurchmesser (D2) aufweist, der im Wesentlichen gleich dem Außendurchmesser (D1) des Gehäuses (10) der Patrone (2) ist.

## Claims

1. Mounting support (S) for a filter canister (2) provided with an external housing, in particular, a crimped canister, said support having:
- a base (30) intended to be connected to a lubrication circuit for an internal combustion engine, the base (30) having an inlet (31) for raw lubrication fluid, an outlet (32) for purified lubrication fluid, and a conduit (C) that communicates with one of said inlet (31) and said outlet (32),
- an axial sleeve (41) connected in leakproof manner to said conduit (C), said axial sleeve (41) forming part of a metallic attachment interface (40) for contact with the filter canister (2),
**characterized in that** the base (30) is of plastic material,
**and in that** said attachment interface (40) comprises:
- said metal, axial sleeve (41), which defines an axial passageway that communicates by a first extremity (41a) of the axial sleeve with one of said inlet (31) and said outlet (32) of the base, a first annular sealing zone (51) being formed between the base (30) and the axial sleeve (41) of the attachment interface (40), the axial sleeve having attachment means chosen from among threads, pins, or notches, provided on a second extremity (41b), allowing the filter canister (2) to be attached,
- a metal annular external portion (42) integral with the axial sleeve (41) and connected in leakproof manner to the base while forming a second annular sealing zone (52) between the base (30) and the attachment interface (40), at a distance from the first annual sealing zone (51), and
- at least one opening (43, 44, 45) allowing liquid to circulate between the first and second sealing zones (51, 52), said opening communicating with the other of said inlet (31) and said outlet (32) of the base (30).

2. Support (S) according to claim 1, in which the attachment interface (40) is a one-piece metal part.

3. Support (S) according to claim 2, in which the axial sleeve (41) is directly inserted by its first extremity (41a) into a conduit (C) of the base (30), the first annular sealing zone (51) being formed around the axial sleeve.

4. Support (S) according to claim 2 or 3, in which the axial sleeve (41) has a central axis (A), the support (S) comprising antirotation means (37, 40b; 46) formed on both the base (30) and the attachment interface (40) to prevent rotation of the attachment interface (40) with respect to the base (30) around the central axis (A).

5. Support (S) according to claim 4, in which the antirotation means have a notch (46) formed on the axial sleeve (41) and a complementary outward projection formed on an internal face of the conduit (C) of the base (30).

6. Support (S) according to any of the previous claims, in which the attachment interface (40) has a plurality of spacers (40b) between the axial sleeve (41) and the annular external portion (42), the openings (43, 44, 45) being arranged respectively between two adjacent spacers in an annular space formed between the axial sleeve (41) and the annular external portion (42).

7. Support (S) according to claim 4 or 5, in which the attachment interface (40) has a plurality of spacers (40b) and the antirotation means comprise outward projections (37) formed integrally with the base (30), each of the spacers (40b) extending through a space (E) formed between two adjacent outward projections (37).

8. Support (S) according to any of the previous claims, in which the first extremity (41a) of the axial sleeve (41) projects axially toward the exterior from a transverse plane defined by an upper face (40a) of the annual external portion (42) to form a male connection element, preferably provided with threads (35).

9. Support (S) according to any of the previous claims, in which the first extremity (41a) of the axial sleeve (41) is welded to the conduit (C) of the base, the welding zone forming said first sealing zone (51).

10. Support (S) according to any of the previous claims, in which the annular external portion (42) of the attachment interface (40) has an external face on which is formed a peripheral groove (G) that emerges radially toward the exterior, an annular seal (J) being arranged in the groove (G) and resting against a tubular wall (36) of the base (30) to form said second annular sealing zone (52).

11. Support (S) according to claim 10, in which the base (30) has an internal collar (70) that surrounds the axial sleeve (41), the annular external portion (42) extending around the internal collar (70).

12. Liquid filter (1) comprising a mounting support (S) according to any of the previous claims and a filter canister (2) attached in removable manner on the support, the filter canister having an external housing (10) delimiting an interior volume (V) containing a filter element (EF) that separates said interior volume into an upstream space (Z1) and a downstream space (Z2), the housing comprising a bottom (11) delimiting at least one liquid inlet passageway that communicates with the upstream space (Z1) and a liquid outlet passageway that communicates with the downstream space (Z2), said housing (10) being suitable for mounting on the support (S), which has a liquid inlet channel (31) provided to communicate with the inlet passageway (12) and a liquid outlet channel (32) provided to communicate with the outlet passageway (34).

13. Filter (1) according to claim 12, in which the annular external portion (42) of the attachment interface (40) has an external diameter (D2) that is appreciably equal to the external diameter (D1) of the housing (10) of the canister (2).
